# EUROPÄISCHE PATENTSCHRIFT

(11) **EP 4 426 594 B1**
(45) Veröffentlichungstag und Bekanntmachung des Hinweises auf die Patenterteilung: **10.09.2025**
(21) Anmeldenummer: 22801990.7
(22) Anmeldetag: 27.10.2022
(51) Int. Cl.: B60T 17/22, B60T 13/74, F16D 51/22, F16D 65/54, F16D 66/02, F16D 55/08

(54) **VERFAHREN ZUR ELEKTRONISCHEN LÜFTSPIELREGELUNG EINER FAHRZEUGRADBREMSE UND ELEKTRONISCHES KRAFTFAHRZEUGBREMSSYSTEM DAZU**
METHOD FOR ELECTRONIC AIR CLEARANCE CONTROL OF A VEHICLE WHEEL BRAKE AND ELECTRONIC MOTOR VEHICLE BRAKE SYSTEM THEREOF
PROCEDE DE COMMANDE ELECTRONIQUE DE DEGAGEMENT DANS L'AIR D'UN FREIN DE ROUE DE VEHICULE ET SYSTEME DE FREINAGE ELECTRONIQUE DE VEHICULE AUTOMOBILE ASSOCIE

(30) Priorität: 01.11.2021 DE 102021212288; 16.03.2022 DE 102022202615
(43) Veröffentlichungstag der Anmeldung: 11.09.2024
(73) Patentinhaber: Continental Automotive Technologies GmbH, 30175 Hannover (DE)
(72) Erfinder: BALZ, Jürgen, 30175 Hannover (DE); HOFFMANN, Jens, 30175 Hannover (DE); VEY, Christian, 30175 Hannover (DE); GÄDKE, Martin, 30175 Hannover (DE); PLA, Sébastien, 30175 Hannover (DE)
(74) Vertreter: Aumovio Corporation
(86) Internationale Anmeldenummer: PCT/DE2022/200248
(87) Internationale Veröffentlichungsnummer: WO 2023/072351

(56) Entgegenhaltungen:
- EP-A1- 3 808 619
- EP-B1- 3 808 619
- EP-B1- 3 914 489
- WO-A1-2009/053429
- DE-A1- 102012 205 576
- DE-T5- 112019 000 912
- US-A1- 2007 068 237
- US-A1- 2007 228 815
- US-A1- 2012 193 177
- US-A1- 2021 331 653
- US-B2- 8 924 119

## Beschreibung

Die Erfindung betrifft ein Verfahren zur elektronischen Bremslüftspielregelung, wie insbesondere zum Anfahren und Halten eines elektronisch mikroprozessorgestützt und bedarfsgerecht definiert ermittelten Lüftspiels, und wobei dies individuell sensorgestützt definierte Lüftspiel einer elektrischen Radbremse eines Kraftfahrzeugs bedarfsgerecht, individuell aufgeprägt wird, sowie ein elektronisches Kraftfahrzeugbremssystem umfassend mehrere elektrische Radbremsen zwecks Ausführung des Verfahrens der elektronisch mikroprozessorgestützt aufprägbaren Bremslüftspielregelung.

Elektrische Radbremsen werden in Kraftfahrzeugen typischerweise verwendet, um diese zu verzögern. Insbesondere sind Trommelbremsen und auch Scheibenbremsen weit verbreitet. Insbesondere werden Bremsbacken verwendet, um eine Bremswirkung zu erzeugen. Manchmal sind Federmittel vorgesehen, die vorgespannt sein können, und immer auf die Bremsbacken einwirken können, um die Bremsbacken aus einem Reibeingriff zu ziehen. Beispielsweise können bei hydraulisch betätigten Trommelbremsen elastisch vorgespannte Zugfedern verwendet werden, um die Bremsbacken nach dem Druckaufbau zurückzustellen, wodurch ein Lüftspiel zwischen Bremsbacken und Trommel entsteht und Restmomente vermieden werden. Um ein zu enges Zusammenziehen, also ein zu großes Lüftspiel, zu verhindern, kann beispielsweise bei Simplex-Trommelbremsen ein mechanischer "Adjuster" eingesetzt werden, welcher dem entgegenwirkt. Gleichzeitig bewirkt dieser Adjuster häufig einen automatischen Nachstellprozess im Fall von Belagverschleiß, da spreizwegabhängig ein Spindel-/Mutter-System auseinanderfährt, meist betätigt durch ein Schrittschaltwerk. Derartige Adjuster sind typischerweise toleranzempfindlich und können Störgrößen unterliegen. Wird beispielsweise ein Lüftspiel zu klein eingestellt, können Restmomente entstehen. Diese können beispielsweise dazu führen, dass die Radbremse auch während der Fahrt ein Bremsmoment erzeugt und somit zu unnötigem Verschleiß und unnötigem Energieverbrauch führt. Bei den bekannten Systemen ist zudem nachteilig, dass den Bremsbacken immer besondere Rückstellbefederung oder zumindest eine Hardwarekomponente mit Rückstellfederwirkung vorliegen muss, welche mittelbar oder unmittelbar auf die Bremsbacken einwirkt, was stets einen baulichen Aufwand beziehungsweise konstruktive Komplexität erhöht. Die bisher bekannten Systeme oder Verfahren genügen den gesteigerten Anforderungen von modern konfektionierten elektrischen Radbremssystemen, enthaltend elektrische Radbremsaktuatoren, nicht.

Die US 2007068237 A1 bezieht sich auf eine elektromechanische Bremse mit einem Verfahren zur Klemmkraftabschätzung, das die folgenden Schritte umfasst: Bereitstellen eines Motors mit mindestens einem erkennbaren Motorsignal, wobei der Motor dazu geeignet ist, einen ersten drehfesten Körper in Eingriff mit einem zweiten rotierenden Körper zu bringen, Bestimmen eines ersten Werts für das Motorsignal, bevor der erste Körper in Eingriff mit dem zweiten Körper gelangt, Bestimmen eines zweiten Werts für das Motorsignal, nachdem der erste Körper in Eingriff mit dem zweiten Körper gelangt, und Erzeugen eines Kraftwerts basierend auf einem Vergleich des zweiten Werts mit dem ersten Wert. Die Bremse ist ohne Lüftspielregelung vorgelegt, denn es wird lediglich zwischen einer vollständig zurückgefahrenen Anfangsposition einerseits und einer komplett ausgefahrenen Klemmposition andererseits unterschieden.

Es ist deshalb eine Aufgabe der Erfindung, ein Verfahren zur elektronischen Lüftspielregelung bereitzustellen, welches im Vergleich zum Stand der Technik alternativ oder besser ausgeführt ist. Es ist des Weiteren eine Aufgabe der Erfindung, eine elektronisches Kraftfahrzeugbremssystem mit elektrischen Radbremsen zwecks Ausführung des elektronischen Verfahrens bereitzustellen. Dies wird erfindungsgemäß durch ein Regelverfahren und ein Bremssystem mit elektrischen Radbremsen gemäß den jeweiligen Hauptansprüchen erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht, und umgekehrt.

Die Erfindung betrifft im engeren Sinne ein Verfahren zur elektronischen Lüftspielregelung einer elektrischen Radbremse für ein Kraftfahrzeug. Die elektrische Radbremse weist insbesondere einen oder mehrere Bremsbacken auf, die durch einen elektrischen Aktuator anhand einer oder mehrerer elektronischer Steuereinheit(en) (ECU) elektronisch betätigbar sowie lösbar vorgesehen sind. Das elektronische Lüftspielregel - bzw. Lüftspielhalteverfahren weist dabei primär die folgenden essenziellen Schritte auf:
- elektrisches Anfahren einer (Brems-)Ruheposition, in welcher ein bestimmtes Lüftspiel eingestellt ist, und
- Zuführen elektrischer Energie an den Aktuator (Ruhebestromung), so dass die angefahrene Ruheposition gehalten wird.

Die Ruheposition einer Fahrzeugradbremse wird bei dem erfindungsgemäßen Verfahren demzufolge erstmals nicht konventionell, starr, mechanisch beispielhaft über die sogenannte Adjustervorrichtung in zwingender Kombination mit elastisch vorgespannten Rückstellfedern auf der Grundlage der hydraulischen Trommelbremsen nach einem bekannten Stand der Technik definiert, sondern erstmals elektrisch bedarfsgerecht d.h. individuell nach Bedarf definiert sowie elektrisch reguliert, indem definiert eine elektrische Energie individuell aufgeprägt wird. Demzufolge ermöglicht es die vorliegende Erfindung überraschend einfach durch glücklichen Griff erstmals, eine hinreichend robuste und auch präzise sowie gleichwohl effiziente, das heißt massentaugliche Sonderregelung zum Erhalt einer individualisierten, bedarfsgerechten, Ruhestellposition einer Bremsaktuatorik bei einer elektrischen PKW-Fahrzeugradbremse anzubieten, ohne gleichzeitig einen unbeherrschbar hoch gesteigerten apparativen (Sensor-)Aufwand an dieser höchstbeanspruchten sowie sicherheitsrelevanten PKW-Fahrzeugkomponente auszulösen.

**In** einer besonders praxisgerechten Spezifizierung handelt es sich bei der erfindungsgemäß aufgeprägten elektrischen Energie insbesondere um einen radindividuell mikroprozessorgestützt bestimmten, sowie dem jeweiligen elektrischen Bremsaktuator definiert individuell aufgeprägten, elektrischen Strom. Dies ist der sogenannte erfindungsgemäße Haltestrom, welcher insbesondere bevorzugt als ein geregelter Gleichstrom durch die Steuereinheit an den elektrischen Aktuator übertragen wird, und wobei all dies in einem Gleichspannungsbordnetz eines Kraftfahrzeugs vorliegt. Die Wirkung dieser definiert geregelt zugeführten Energie, wie insbesondere des definierten Haltestroms, ist dabei vorliegend genau so gerichtet sowie bemessen, dass beispielsweise eine Rückstellmittelwirkung von einer (oder mehrerer) elastischer Rückstellfedern, Rückstellmittel, Roll-Back-Ring, Knock-Back o.ä. - welcher unmittelbar oder mittelbar eine Bremsbacke in eine Rückstellrichtung ("rückwärts") beaufschlagen könnte - zumindest um ein geringfügiges, bestimmtes Maß reduziert ist. Eine einem elektrischen Radbremsaktuator für diese Einjustierung seiner Ruheposition individuell aufgeprägte elektrische Energie bewirkt demzufolge zumindest einen, ggf. auch nur relativ geringfügigen, Aktuatorstellvorgang welcher dafür geeignet sowie bestimmt ist, um entgegengesetzt gerichtete Wirkungen, wie federmechanische Auswirkungen von Rückstellmitteln in Bezug auf die jeweilige Bremsbacke(n) zu kompensieren bzw. graduell zu mindern, ergo diese Rückstellmittelwirkung graduell zu kompensieren, so dass keine rein mechanisch willkürlich vorgegebene rückwärtige Endlage der Bremsbacken bzw. Bremsbeläge gilt, sondern vielmehr eine bedarfsgerecht einjustierte sowie elektroenergetisch definiert aufgeprägte Ruheposition für die jeweilige Radbremse vorliegt. Diese erfindungsgemäß elektrisch einregulierte Ruheposition im Fahrzeugfahrbetrieb beinhaltet dabei das vorteilhafterweise bedarfsgerecht und radbremsindividuell eingesteuerte Lüftspiel bzw. einen Lüftspielbereich L, was den herrschenden oder gewünschten Betriebsbedingungen und/oder Rahmenbedingungen Rechnung trägt. Mit derartig geregeltem Anfahren der Ruheposition der Reibungsbremse wird Reibverschleiß infolge von schwindenden Verschleißteilen automatisch kompensiert und gleichzeitig wird auf rationelle Art und Weise eine übermäßige Rückstellung verhindert. Dabei können Verschleißmaße durch eine "Kiss Point Erkennung" KP der jeweiligen Radbremse und/oder durch Abgleich mittels Aktuatorstromerkennung radindividuell ermittelt sowie nachgestellt werden.

Zwecks Reduktion von einer elektrischen Fahrzeugbordnetzbeanspruchung darf bestimmt sein, dass die beschriebene energetisch definierte sowie elektrisch aktiv gehaltene Radbremsruheposition mit definiert einjustierter Lüftspielstellung ausschließlich für einen aktiven Fahrzeugfahrbetrieb (Fahrzeugfahrbetrieb erkannt - wie beispielsweise Zündung ein + Feststellbremse gelöst) gilt.

Eingangs beschriebene Probleme, insbesondere in Bezug auf Toleranzen und Abhängigkeit von Betriebsparametern, können anhand radindividueller elektrischer Regelung vermieden werden. Die elektrische Energie kann dafür verwendet werden, das Lüftspiel für einen Zeitraum zu halten, in welchem insbesondere keine Bremswirkung erfolgt. Die elektrische Energie kann dementsprechend permanent zugeführt werden. Die elektrische Energie kann auch situativ und/oder bedarfsgerecht zugeführt werden. Anders ausgedrückt wird die elektrische Energie typischerweise so lange zugeführt, wie das Lüftspiel gehalten werden soll, typischerweise also solange keine Bremskraft aufgebaut werden soll. Unterbrechungen, welche beispielsweise regelungstechnisch bedingt sind, stehen dem Zuführen elektrischer Energie nicht entgegen bzw. beenden diese nicht.

Die elektrische Energie kann beispielsweise in Form eines konstanten Ruhestroms zugeführt werden, was beispielsweise im Fall eines einfachen Elektromotors erfolgen kann. Die elektrische Energie kann jedoch auch beispielsweise bei elektronisch kommutierten Motoren in erheblich komplexerer Form zugeführt werden, wobei beispielsweise Phasen gezielt angesteuert werden. Die Phasen können dabei konstant oder auch während des Haltens des Lüftspiels veränderlich angesteuert werden.

Unter einem Lüftspiel wird insbesondere ein Abstand eines Bremsbackens von einer Bremsrotor oder einer Bremsscheibe oder einem ähnlichen Element verstanden. Das Lüftspiel soll insbesondere so groß sein, dass ein Restmoment vermieden wird, dass also kein Bremsmoment aufgebaut wird, wenn keine Bremskraftanforderung vorliegt. Es soll jedoch andererseits auch so klein sein, dass eine möglichst schnelle Betätigung der Radbremse erfolgen kann. Die Ruheposition ist typischerweise diejenige Position entlang eines Verfahrwegs des Aktuators, in welcher der Lüftspielbereich L eingestellt ist, so dass der Bremsbacken oder die Bremsbacken den gewünschten Abstand zum Bremsrotor haben.

Gemäß einer Ausführung ist die Radbremse eine Trommelbremse. Gemäß einer weiteren Ausführung ist die Radbremse eine Scheibenbremse. Für derartige Radbremsen hat sich das hierin beschriebene Verfahren besonders bewährt. Grundsätzlich kann es jedoch für alle Radbremsen verwendet werden, in welchen ein oder mehrere Bremsbacken durch einen elektrischen Aktuator betätigt werden.

Insbesondere kann die Ruheposition während eines Betriebs der Radbremse laufend aktualisiert werden. Dadurch kann Veränderungen der Radbremse Rechnung getragen werden, welche im Zeitverlauf auftreten können. Beispielsweise kann einem Verschleiß der Radbremse Rechnung getragen werden, welcher durch Abrieb von Bremsbelägen entstehen kann. Die Aktualisierung kann beispielsweise durch Aufnahme von Kraft-Weg-Kennlinien erfolgen.

Bei einer Ausführung weist die Radbremse einen rückwärtigen Endanschlag für die Bremsbacke auf. Grundsätzlich ist es möglich, dass ein derartiger rückwärtiger Endanschlag aktuatorgestützt elektrisch angefahren werden kann, um beispielsweise einen Bremsbackenwechsel auszuführen. Es ist möglich dass ein oder mehrere Rückstellmittel vorliegen, die als elastisch vorgespannte Federmittel vorliegen dürfen, und die Bremsbacke beaufschlagen können. Bei einer Trommelradbremse kann beispielsweise ein Rückstellfedermittel als elastisch vorgespannte Zugfeder zwischen zwei Bremsbacken eingespannt sein. Dies dient dazu, dass jede Bremsbacke grundsätzlich stromlos sowie elastisch permanent in Richtung auf die unbetätigte Position (rückwärtiger Endanschlag) zu vorgespannt sind. Dadurch haben Bremsbacken das generelle Bestreben, für den Fall, dass eine Radbremse nicht betätigt werden soll, oder auch für den Fall einer Fehlfunktion, in diese gelöste unbetätigte Position (rückwärtiger Endanschlag) zu gelangen, so dass auf gar keinen Fall irgendwelches Bremsmoment erzeugt wird.

Gemäß einer Ausführung weist die Radbremse allerdings gar kein mechanisches Rückstell(feder)mittel/Lüftspieleinstellmittel auf. Es wird also der gewünschte Lüftspielbereich L/ das gewünschte Lüftspiel ausschließlich durch den erfindungsgemäßen Prozess anhand der erwähnten Zuführung elektrischer Energie eingestellt und gehalten. Insbesondere kann auf den bereits weiter oben beschriebenen Adjuster verzichtet werden. Ein mechanisches Lüftspieleinstellmittel könnte beispielsweise so ausgebildet sein, dass die Bewegung des Bremsbackens oder der Bremsbacken weg von der Trommel oder der Scheibe in einstellbarer Weise begrenzt wird. Ein solches mechanisches Lüftspieleinstellmittel ist bei der Verwendung des hierin beschriebenen Verfahrens nicht zwingend nötig, kann aber dennoch vorliegen. Es kann somit bei Bedarf Kosten und Aufwand eingespart werden.

Insbesondere kann die zugeführte elektrische Energie eine Leistung von höchstens 1 W aufweisen. Derartige Werte haben sich für typische Anwendungsfälle bewehrt. Sie sind typischerweise leicht in Kauf zu nehmen, da sie das Bordnetz eines Kraftfahrzeugs und seine Energiebilanz nur wenig belasten und somit akzeptabel sind, um das Lüftspiel auf die hierin beschriebene Weise einzustellen. Auch größere Leistungen können jedoch grundsätzlich verwendet werden.

Die zugeführte elektrische Energie kann insbesondere zum Halten der Ruheposition geregelt werden. Es kann also beispielsweise eine Überwachung der Ruheposition implementiert werden, wobei die elektrische Energie erhöht oder erniedrigt wird, falls eine Auslenkung aus der gewünschten Ruheposition erfolgt. Dies kann beispielsweise auch bei komplexeren Motorsteuerungen, wie beispielsweise einer Phasensteuerung eines elektronisch kommutierten Motors, erfolgen.

Der Aktuator kann beispielsweise mit den Bremsbacken verbunden sein, so dass er die Bremsbacken aktiv zurückziehen kann. Dies kann auch als eigenständiges erfinderisches Merkmal betrachtet werden. Beispielsweise kann in diesem Fall auf Rückstellmittel oder sonstige mechanische Rückstellmittel verzichtet werden. Der Aktuator kann mit anderen Worten in diesem Fall die Bremsbacken in beiden Richtungen aktiv betätigen, so dass sie auch mittels des Aktuators von einer Bremsrotor oder einer Bremsscheibe entfernt werden können. Insbesondere kann der Aktuator hierzu fest mit den Bremsbacken verbunden sein, beispielsweise über Gelenke.

Die Ruheposition kann insbesondere in Abhängigkeit von einem oder mehreren Parametern nachgeführt werden. Solche Parameter können beispielsweise Betriebsparameter wie Temperatur oder Alterung sein. Die Ruheposition kann insbesondere basierend auf einer gemessen Kraft-Weg-Kennlinie oder mehreren gemessenen Kraft-Weg-Kennlinien nachgeführt werden. Derartige Kraft-Weg-Kennlinien können beispielsweise aufgenommen werden, während das Kraftfahrzeug steht, und/oder können bei einer Initialisierung aufgenommen werden. Beispielsweise kann die Ruheposition zum Beginn eines Zündungslaufs neu bestimmt werden. Ein solcher Zündungslauf kann beispielsweise gestartet werden, wenn das Kraftfahrzeug nach einem Parken wieder in Betrieb genommen wird, der Fahrer also beispielsweise das Kraftfahrzeug aktiviert, um damit loszufahren.

In Weiterbildung der Erfindung ist in Kooperation mit und/oder für sämtliche denkbare Ausgestaltungen oder Variationen des Regelverfahrens und/oder Fahrzeugbremssystems eine modusabhängige Lüftspieladaption, welche geeignet ist, für einen Fahrzeughersteller gänzlich ohne besonderen apparativen Zusatzaufwand eine Vermarktung von einer beispielhaft ökologisch vorteilhaften und/oder fahrfreudsteigernden sportlichen Mehrwertfunktion zu erschließen, indem ein Bremsverhalten anhand Adaption der Lüftspielregelung einfach reproduzierbar - modusabhängig - adaptierbar ausgestaltbar ist. Die Erfindung ermöglicht modusabhängig eine Definition von zueinander unterschiedlich dimensionierten, adaptierbaren, Lüftspielpositionierungen, was eine elektronisch-maschinengestützte, d.h. automatische und/oder fahrzeugführergestützte, vorwählbare, Lüftspieladaption und Lüftspielmodusdefinition ermöglicht. In diesem Zusammenhang ist beispielhaft denkbar, dass die elektronische Steuereinheit oder ein Fahrzeugführer einen Sport-Modus für die Lüftspielbemessung anwählt, und wobei dieser Sport-Modus beispielhaft mit einer ganz besonders eng definierten Lüftspielweite kooperiert, damit anhand dieser Sport-Modusanwahl reproduzierbar ein ganz besonders sportlich-beschleunigtes ergo besonders leerwegreduziertes sicherheitsbetont-beschleunigtes Fahrzeugbremsverhalten bei enger Lüftspieldimensionierung gewährleistet werden kann, was beispielhaft stets geringste Anhaltewege garantieren kann. Konträr zu einem derartigen Modus ist es erfindungsgemäß beispielhaft ermöglicht, einen "Gelände" und oder "Green Mode" mit jeweils graduell unterschiedlich erhöht abgestimmter Lüftspielweite vorzusehen, so dass ein Bremsschleifen wie insbesondere graduelles Restbremsmoment selbst bei größter Bremsverschmutzung ganz sicher ausgeschlossen werden, damit die Vorteile eines entsprechend geänderten Bremsverhaltens nach Wunsch oder bei Bedarf elektronisch reproduzierbar dargestellt werden können. Die Unterscheidung der bedarfsgerecht definierten unterschiedlichen Lüftspielweiten ist durch Softwareparameter auf unterer Fahrzeugebene grundsätzlich frei programmierbar definierbar sowie mit überschaubarem Aufwand, aber gegen unautorisierten Missbrauch abgesichert, softwaretechnisch abänderbar. Eine Lüftspielmodusauswahl darf sich auf alle elektrischen Radbremsen eines Bremssystems auswirken oder es ist alternativ definierbar, dass eine selektive Wirkung nur für ganz bestimmte Radbremsen beabsichtigt ist. Beispielhaft bezieht sich eine selektive Wirkung ausschließlich auf paarweise zusammengefasste Radbremsen eines Bremskreises und/oder einer Fahrzeugachse, nämlich beispielhaft selektiv nur für die Radbremsen einer Vorderachse VA. Beispielhaft kann eine adaptiv angepasste Lüftspielweite für einen sog. Green Mode (Fahrzeugstraßenbetrieb) mindestens etwa doppelt so groß bemessen sein wie in einem sog. Sport Mode. Ein sog. Gelände Mode (Geländebetrieb, Schlechtwegbetrieb) könnte demgegenüber beispielhaft verschmutzungsbedingt mit dreifach erhöhter Lüftspielbemessung darstellbar sein.

Das beschriebene adaptiv gestaltete elektronische Lüftspielregelverfahren sowie das einschlägige elektrische Bremssystem darf zwecks besonders abgesicherter Lüftspielregelung seiner Radbremsen schließlich einen sogenannten Fail-Safe-Mode beinhalten. In diesem Zusammenhang geht für einen beispielhaft erkannten Bremssystemfehlerfall als Fall-Back der vorprogrammierte, definierte, Fail-Safe-Mode vor. Dies hat beispielhaft zur Folge, dass alle fehlerfrei erkannten Systeme, Komponenten sowie Teile wie insbesondere elektrische Radbremsen mit einem sicherheitsbetonten Lüftspiel angesprochen werden, welches stets maximale Fahrsicherheit unter Berücksichtigung des erkannten Fehlers sicherstellt. Für diesen Umstand ist aus Sicherheitsgründen jegliche fahrergestützte wie insbesondere die manuelle Lüftspielmodusauswahl unterbunden. Denn Sicherheit, also der Fail-Safe-Mode, geht in seiner Rangordnung vor.

Zwecks passender Kooperation und/oder Abstimmung sowie Interaktion eines Fahrzeugreibungsbremssystems mit einem rekuperativen Fahrzeugbremssystems sowie umgekehrt ist eine gegenseitige elektronische Vernetzung zwischen elektrischen Steuergeräten vorgesehen und wobei diese elektronische Vernetzung einen regelungstechnischen Datenaustausch über Status sowie Zustand der verschiedenen Komponenten und Systeme wie insbesondere einen Datenaustausch über die Lüftspielregelung und/oder Lüftspielmodusauswahl beinhalten kann. Dadurch wird es beispielhaft sehr zielführend ermöglicht, dass per Abgleich gemeinsam mit einer besonderen Lüftspielmodusauswahl ausgehend von dem Reibungsbremssystem, gewissermaßen flankierend/begleitend eine systematisch passende Gelände-Modus, Sport-Modus und/ Green Modus-Antriebs-/Rekuperationsbremskonfiguration in die elektrische Steuereinheit ECU eines parallelen Antriebsstrang-/(rekuperativen) Fahrzeugbremssystems einzuspiegeln, und/oder umgekehrt.

Die Erfindung betrifft des Weiteren ein elektronisches Bremssystem mit wenigstens einer elektronischen Steuereinheit einschließlich mehrerer elektrischer Radbremsen für ein Kraftfahrzeug. Alle elektrischen Radbremsen sind dazu konfiguriert, im System ein Lüftspielregelverfahren gemäß der vorliegenden Erfindung auszuführen. Bezüglich des Verfahrens kann auf alle hierin beschriebenen Ausführungen und Varianten zurückgegriffen werden.

Insbesondere kann eine solche Radbremse eine Steuerungseinrichtung aufweisen, welche zur Ausführung eines erfindungsgemäßen Verfahrens konfiguriert ist. Sie kann insbesondere einen Aktuator und einen oder mehrere Bremsbacken aufweisen, die durch den elektrischen Aktuator betätigbar sind.

Beispielsweise können Rückstellmittel weiterhin eingesetzt werden. Nachdem der Aktuator die Lüftspielposition angefahren hat, kann durch permanente oder situativ geringe Bestromung die Position eingeregelt bzw. im Bedarfsfall neu angefahren werden. Letzteres kann insbesondere erfolgen, falls Reibungskräfte aufgrund einer Getriebehysterese kleiner als Rückstellkräfte sind. Geringe elektrische Leistungen von beispielsweise höchstens 1 W oder auch weniger sind dauerhaft vertretbar und führen zu keiner nennenswerten Temperaturerhöhung im Aktuator. Sollte sich das Lüftspiel nach "Zündung aus" vergrößern, ist es Aufgabe eines Algorithmus, das Lüftspiel erneut einzuregeln, insbesondere nach erneutem Startvorgang des Fahrzeugs. Sollte nach einer Trommelabkühlung das Lüftspiel unzulässig klein werden, können sowohl Temperaturmodell als auch Spreizkraftsensorik für eine Korrektur sorgen.

Gemäß einer Ausführung können auch Rückstellmittel entfallen und die Bremsbacken insbesondere an eine Spreizmechanik gekoppelt sein. Da gegenüber einer hydraulischen Betätigung der Motor beim Lösen die Bremsbacken aktiv zurückziehen kann, sind nach Einstellung des Lüftspiels keine Kräfte vorhanden, die das Lüftspiel verändern. Eventuell können, insbesondere wenn die gespeicherte Federkraft durch Verspannen der Radbremse nicht ausreicht, Federn mit reduzierter Federkraft eingesetzt werden, die im Fehlerfall, beispielsweise bei einem Stromausfall, Restmomente minimieren, aber nicht das Getriebe vollständig zurücktreiben können, insbesondere aufgrund der Getriebereibung.

Mechanische Nachstelleinrichtungen können vorteilhaft entfallen. Die Lüftspieleinstellung kann mittels des hierin beschriebenen Verfahrens sehr präzise erfolgen. Falsche Nachstellungen aufgrund thermischer Störgrößen oder hoher Betätigungskräfte können vermieden werden. Das Lüftspiel kann insbesondere situativ (Moduswahl) eingestellt werden, zum Beispiel kann es bei einer möglichen erkannten Kollisionsgefahr automatisch sehr klein eingestellt werden, und es kann beispielsweise sehr groß eingestellt werden für eine schnelle Reduktion der Restmomente mit anschließendem Regeln auf ideale Position. Insbesondere können demzufolge Restbremsmomente reduziert werden, und zwar idealerweise auf 0 Nm in möglichst kurzer Zeit.

Die vorliegende Erfindung ist systematisch und im weitesten Sinne ganz besonders dazu prädestiniert, bei vertretbarem Aufwand anhand funktionaler System + Radbremsverbesserung einen besonders wichtigen ökologischen Teilbeitrag zur geforderten Co₂ - Reduktion / Reduktion von individualverkehrsbedingten Klimaeffekten / d.h. Beitrag zur Reduktion von Treibhausgasen zu liefern, ohne unvertretbar kostenintensiv in eine evolutionär definierte Fahrzeugarchitektur einzugreifen. Dabei steht der Erfindung jegliche Kooperation mit sämtlichen Energieträgern frei. Dies betrifft nämlich die gegeben definierten Energieträger, wie Verbrennungsmotoren (flüssig, gasförmig), HEV, EV (Akkutechnologie) und sogar auch zukünftige Energieträger wie z. B. wasserstoffbasierte Brennstoffzellenkonfigurationen.

Das hierin beschriebene Verfahren kann beispielsweise für elektrisch betätigte Trommelbremsen oder elektrisch betätigte Scheibenbremsen verwendet werden. Insbesondere können alle Bauformen verwendet werden, beispielsweise Simplex, Duo-Servo, etc. Das Verfahren kann sowohl für Betriebsbremsen wie auch für Parkbremsen wie auch für kombinierte Betriebs- und Parkbremsen eingesetzt werden.

Typische Adjuster, welche bei Ausführungen gemäß dem Stand der Technik eingesetzt werden, können typischerweise zusätzlich auch den Belagverschleiß weggesteuert kompensieren und teilweise ein ungewolltes Nachstellen infolge Ausdehnung der heißen Trommel verhindern. Diese beiden Steuerungsarten stellen typischerweise einen Kompromiss zwischen vielen unterschiedlichen Systemzuständen, Teiletoleranzen etc. dar, welche in der Regel so ausgelegt werden, dass der Worst Case, beispielsweise ein zu hohes Restmoment oder ein Klemmen, verhindert wird. Dadurch wird mit solchen mechanischen Nachstelleinrichtungen typischerweise nie das ideale Lüftspiel eingestellt.

Mittels der hierin beschriebenen Ausführung kann das Potenzial einer intelligenten Ansteuerung ausgeschöpft werden. Der Einsatz mechanischer Reglerstrukturen sowie unnötiger Komponenten kann vermieden werden.

Insbesondere kann die Lüftspielposition angefahren werden und das dauerhafte kontrollierte Halten der Position kann mittels permanenter, insbesondere sehr geringer Aktuatorbestromung zur Kompensation einer Rückstellmittelkraft oder zu einer erforderlichen Korrektur aufgrund spezifischer Störgrößen, wie beispielsweise Schwingungsanregungen bzw. neuem Zündungslauf, erfolgen. Auch kann eine Kopplung der Spreizeinrichtung an die Bremsbacken erfolgen, wodurch die Backen sowohl in Betätigungs- wie auch in Löserichtung starr fixiert positioniert werden können. Hierbei kann die Rückstellmittel entfallen oder zumindest reduziert werden.

Die Erfindung wird nun anhand der Figur beschrieben. Dabei zeigt schematisch skizziert sowie im Wesentlichen exemplarisch vereinfacht:
Fig. 1: eine elektrische Radbremse in einem ersten Zustand,
Fig. 2: die Radbremse wie in Fig. 1 in einem zweiten Zustand,
Fig. 3: die Radbremse in einem dritten Zustand,
Fig. 4: Teile einer Kraft-Stellweg-Kennlinie KL, KL' für unterschiedliche Bremsverschleißzustände
Fig. 5: die sensorisch bspw. anhand von Kraft/Momentensensor TS durch die verantwortliche ESC-ECU gewonnene Stellkraftkennlinie KL einschließlich die synchron dazu anhand Aktuatorstromsensierung gewonnene Aktuatorstromkennlinie I, jeweils über der Zeit t aufgetragen, und
Fig. 6: vereinfachte Ausführungsform eines elektronischen Kraftfahrzeugbremssystems mit ESC-ECU in Vernetzung mit einem elektrisch-rekuperierenden Antriebsstrang aufweisend eine Antriebsstrang-ECU (M-ECU)

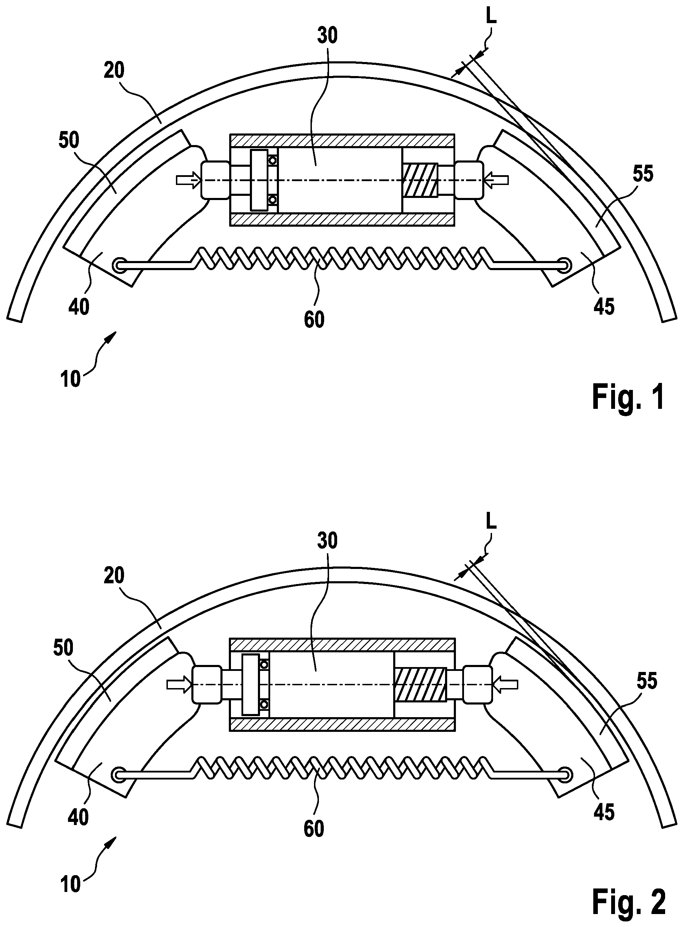

Fig. 1 zeigt eine Radbremse 10 gemäß einem Ausführungsbeispiel in einem ersten Zustand. Die Radbremse 10 ist vorliegend als Trommelbremse ausgeführt. Sie weist hierzu eine Bremsrotor 20 auf, welche in nicht dargestellter Weise mit einer zu bremsenden Welle verbunden ist.

Zur Betätigung weist die Radbremse 10 einen elektrischen Aktuator 30 auf. Dieser ist vorliegend als Spreizeinheit ausgeführt. Die Radbremse 10 weist ferner einen ersten Bremsbacken 40 und einen zweiten Bremsbacken 45 auf. Diese sind mit dem Aktuator 30 verbunden, so dass sie vom Aktuator 30 auseinandergedrückt werden können. Auf dem ersten Bremsbacken 40 ist ein erster Bremsbelag 50 aufgebracht. Ebenso ist auf dem zweiten Bremsbacken 45 ein zweiter Bremsbelag 55 aufgebracht. Des Weiteren weist die Radbremse 10 eine Rückstellmittel 60 auf, welche die beiden Bremsbacken 40, 45 miteinander verbindet. Dadurch werden die Bremsbacken 40, 45 für den Fall einer Nichtbetätigung so vorgespannt, dass die Bremsbeläge 50, 55 nicht die Bremsrotor 20 berühren. Der Aufbau eines Bremsmoments für den Fall, dass keine Betätigung erfolgen soll oder ein Systemfehler vorliegt, wird somit verhindert.

Fig. 1 zeigt einen Zustand, in welchem der Aktuator 30 nicht betätigt ist, in welchem sich also die Bremsbacken 40, 45 in einer maximal zurückgezogenen Position befinden. Dabei wird ein Lüftspiel L eingestellt, welches einen Abstand zwischen Bremsbelägen 50, 55 und Bremsrotor 20 definiert. Das Lüftspiel L stellt somit sicher, dass kein Bremsmoment aufgebaut wird.

Fig. 2 zeigt einen anderen Zustand der Radbremse 10. Dabei ist der Lüftspielbereich/das Lüftspiel L verkleinert ausgeführt. Hierzu wird eine elektrische Energie an den Aktuator 30 angelegt, so dass dieser die Wirkung der Rückstellmittel 60 partiell kompensiert. Die Bremsbeläge 50, 55 liegen dabei noch nicht an der Bremsrotor 20 an, jedoch können sie für den Fall einer Betätigung schneller angelegt werden als dies ausgehend von dem in Fig. 1 dargestellten Zustand möglich wäre.

Das Anlegen einer geringfügigen elektrischen Energie führt zwar zu einem Stromverbrauch, dieser ist jedoch so gering, dass er weder für die Belastung des Bordnetzes noch für die Erwärmung des Aktuators oder für die Energiebilanz des Kraftfahrzeugs eine relevante Rolle spielt. Dafür ergibt sich jedoch der Vorteil, dass auf mechanische Adjuster oder ähnliche mechanische Einrichtungen zum Einstellen des Lüftspiels L verzichtet werden kann. Außerdem kann das Lüftspiel L mit der hierin beschriebenen Vorgehensweise sehr exakt eingestellt werden.

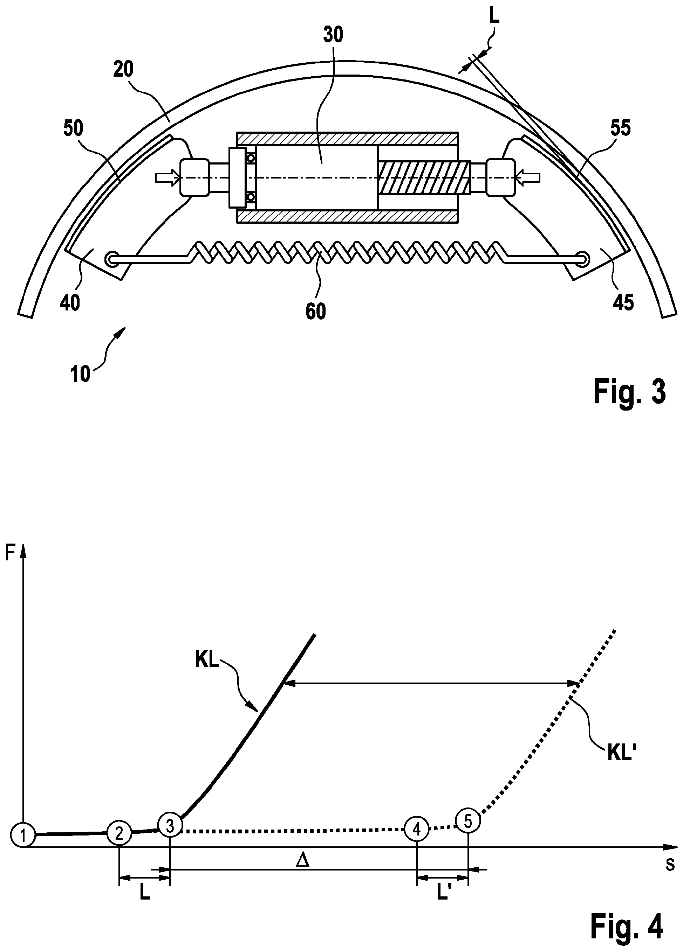

Fig. 3 zeigt einen Zustand der Radbremse 10, in welchem die Bremsbeläge 50, 55 weiter verschlissen sind als dies bei den in den Fig. 1 und 2 dargestellten Zuständen der Fall ist. Dies kann beispielsweise durch die nachfolgend mit Bezug auf Fig. 4 beschriebene Vorgehensweise ermittelt werden. Das Lüftspiel L soll jedoch typischerweise trotzdem konstant bleiben, so dass ein Nachführen einer Ruheposition erforderlich ist. Dies kann beispielsweise dadurch erreicht werden, dass die dem elektrischen Aktuator 30 zum Einstellen des Lüftspiels L zugeführte Energie erhöht wird.

Fig. 4 zeigt schematisch einen Kraft-Weg-Kennlinienteil KL beim Zuspannen einer Radbremse 10 zwecks Erläuterung der Einregulierung bzw. Ermittlung einer Ruheposition im Rahmen der Steuerung bzw. Regelung einer elektrischen Radbremse 10. Der unterbrechungsfrei durchgezogene Kennlinienteil KL bezieht sich dabei auf einen gewissermaßen unverschlissenen Neuzustand von Bremsverschleißteilen, oder beispielhaft bei einem unmittelbaren Anschluss an eine Erneuerung sämtlicher Bremsverschleißteile (im Wesentlichen Austausch der Bremsbeläge + ggf. des Bremsrotors). Ein gepunktet gekennzeichneter Kennlinienteil KL' dokumentiert die Verhältnisse die mit einem fortgeschrittenen Bremsverschleißzustand einher gehen. Auf der Abszisse des Diagramms ist dabei eine Wegstrecke s entlang eines Verfahrwegs eines Aktuators 30 angegeben. Wegen der grundsätzlichen, qualitativen Kurvendiskussion ist hierzu keine konkrete Angabe einer Einheit für den Zustellweg notwendig. Die Einheit könnte nur beispielsweise Millimeter sein. Auf der Ordinate ist eine Bremskraft F angetragen, welche üblicherweise in der Einheit Newton [N] gemessen wird, und welche Kraft beispielsweise von einem in einer Radbremse 10 eingebauten Kraftsensor FS oder alternativ bzw. Ergänzend mit bremsmomentenbasierter Bremsregelungsarchitektur durch einen Radbremsmomentensensor TS (Tourque Sensor) gemessen werden kann.

Die Kennlinie KL beginnt auf dieser Grundlage im Punkt 1 in Verbindung mit einer gänzlich ungehemmt ausgeübten Zurückstellung wie insbesondere eine rückwärtige Bremsanschlagposition also im vollständig zurückgestellten Zustand der Aktuatorik 30 und beispielhaft in Verbindung mit elastisch ungehemmt vorgespannt wirksamen Rückstellmitteln 60. Mit aufgeprägtem Haltestrom erzielt diese Aktuatorik die Ruheposition 2 im Lüftspielbereich L. Es wird im folgenden der Aktuator 30 bremsbetätigt, und die Bremsbeläge 50,55 kommen im Punkt 3 mit dem zugeordneten Bremsrotor 20 (Bremsscheibe oder wie dargestellt Bremstrommel) in Reibeingriff. Dies wird dadurch mit Punkt 3 deutlich, dass die gemessene Kraft F entlang einer Kennlinie KL sehr deutlich quasilinear ansteigt. Die ideal definierte Ruhestellung/Ruheposition ist demzufolge dem Kennlinienbereich L vor dem Kennlinienpunkt 3 zugewiesen, mit der Folge, dass der somit vorgegebene Lüftspielbereich L für eine nachfolgende Betriebsbremsung reproduzierbar aufgesucht, dargestellt und im betätigungsfreien Fahrzeugfahrzustand beizubehalten ist, und wobei diese Ruheposition als Punkt 2 ausgezeichnet ist. Demzufolge ist die elektrische Radbremse 10 im gelösten Bremszustand besonders gut für eine nachfolgende Betriebsbremsung konditioniert, weil die elektrische Stellvorrichtung anhand der elektrischen Aktuatorik 30 keine unnötig verlängerten Leerwege, Löse, Spiele etc. überbrücken muss, bis ein Bremsanlegepunkt / Kiss-Point bei 3 erreicht ist.

Die Kurvendiskussion zu KL' gibt Anlass zu folgenden Bemerkungen. Mit fortschreitendem Verschleiß der Bremsverschleißteile ist die Kennlinie KL zu KL' um den zusätzlichen Stellweg Δ der Stellvorrichtung (Aktuator 30) nach rechts verschoben, was durch den gepunktet dargestellten Kennlinienzweig KL' verdeutlicht ist. Auch für diesen Fall liegen der Steuereinheit ECU die diesbezüglich sensorisch gewonnen Daten (Aktuatorstrom I + Stellkraft/Bremsmoment) vor, nur ist die Allokierung des Lüftspielbereiches L' respektive die definierte Ruheposition 4 verschleißwegbedingt um das Wegstück Δ nach rechts versetzt allokiert, d.h. die Kennlinie KL' wird im Betrieb entsprechend um Δ versetzt verifiziert, gemessen bzw. abgefahren, wobei sich Punkt 5, an welchem sich der verschleißbedingt um den zusätzlichen Weg Δ verschobene neue Kiss-Point mit seinem Reibkontakt anhand eines erheblichen Kraftanstiegs manifestiert, mit "Versatz um Δ" vorliegt, d.h. sehr deutlich um das Wegstück Δ nach rechts verschoben ist. Qualitativ wie zuvor definiert sich bis zu Punkt 5 der definierte maßgebliche Lüftspielbereich L' für die Aktuatorpositionierung, welcher im Bremslösezustand anzufahren und zu halten ist. Mit anderen Worten ist demzufolge die neue Ruheposition mit Punkt 4 definiert, und wird angefahren bzw. eingehalten.

Auf der Grundlage von wiederkehrender, ggf. periodischer Durchführung des vorstehenden Prozesses ist es in hinreichend präziser und dabei rationeller Art und Weise erstmals ermöglicht, eine Ruheposition zur Lüftspielbemessung sukzessive verifizierbar zu aktualisieren, bzw. einem fortschreitenden Bremsverschleiß anzupassen d.h. diesen bedarfsgerecht und individuell zu kompensieren. Zur weitgehend unterbrechungsfreien sukzessiven Verschleißnachstellung empfiehlt es sich, dass eine vermittels der ECU beispielsweise automatisch neu eingelernte bzw. jedenfalls erkannte Ruheposition einer elektrischen Radbremse 10 entweder periodisch oder mit Beginn von einem jeden neuen Zündungslauf neu eingelernt wird, um den Aktuator auf dieser Grundlage zu fahren. Demzufolge ist einem tatsächlichen Bremsverschleiß in übersichtlich-einfacher wie dennoch präziser Art und Weise Rechnung getragen. Die Lüftspielposition kann dadurch für den Fahrzeugfahrbetrieb als die definierte Ruheposition für die Stellvorrichtung/Aktuatorik 30 in einer elektronischen Regelung anhand der einschlägigen ESC-ECU verwendet werden. Dabei wird die Ruheposition 2, 4 mittels einer definiert angelegten elektrischen Energie eingeregelt und gehalten, wenn die gelöste elektrische Radbremse 10 im normalen Fahrzeugfahrbetrieb keine Bremskraft erzeugen soll.

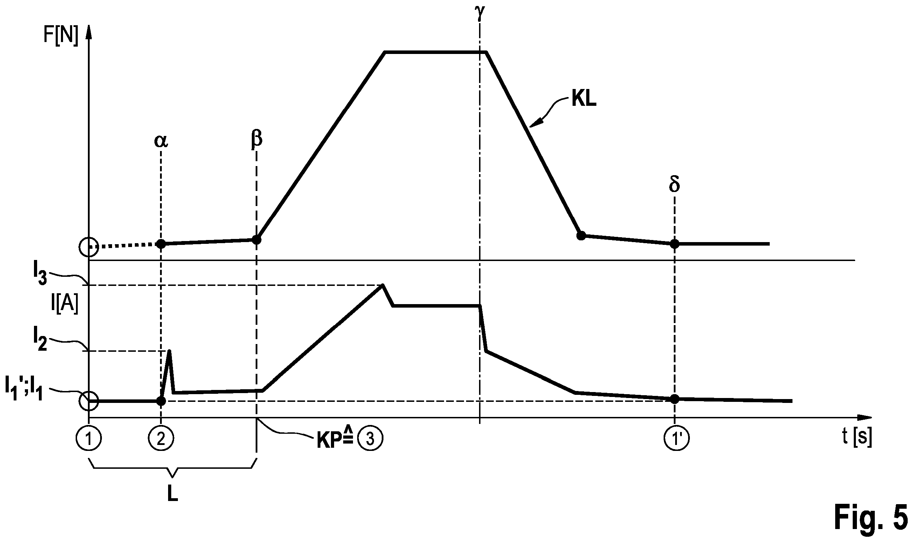

In Ergänzung zu Fig. 4 verdeutlicht Fig. 5 schematisch in einem oberen Figurenteil eine exemplarische Kennlinie KL, und mit zeitsynchron dazugehörigem Aktuatorstromverlauf I im unteren Figurenteil. Dabei gehen die beiden Verläufe jeweils aus von einer aktiv gehaltenen Ruhepunkt 1 unter einem Haltestrom I1, so dass der relativ gering sowie für die Ruhepostion aktiv bestromte Aktuator 30 über seinen Lüftspielbereich L einer aufgeprägten Rückstellfederkraft entgegen wirkt. Bei α - entsprechend Punkt 2 beginnt eine Bremsbetätigung und wobei ein Stromanstieg mit Stromspitze I 2 ein Loslaufen eines Bremsaktuatorantriebsstrangs symbolisiert. Ab Zeitpunkt β entsprechend Kiss Point KP = 3 wird Bremszuspannkraft spürbar gesteigert aufgebracht, was begleitend an einer quasilinearen Stromrampe bis zu einem maximalen Peak in I 3 erkennbar ist. Daran schließt sich ein graduelle geringe Stromabbauphase und eine Konstantstromphase ohne nennenswerten Zuspannkraftverlust an, was die stationäre Betriebsbremsung verkörpert. Eine Bremslöseaktion folgt mit Zeitpunkt γ indem eine Beendigung eines Betriebsbremswunsches physikalisch mit unterschiedlichen Stromgradienten (erkennbar an drei unterschiedlich reduziert, abfallenden Steigungsverläufen der Stromkurve) abgewickelt wird, bis hin zum Erreichen der neuen Bremslösestellung mit einer neuen Brems-Ruheposition zu Zeitpunkt 1' = δ. Mit und nach δ ist der Haltestrom auf I1' reduziert so dass der Aktuator 30 auf dieser Grundlage die neue aktive Ruheposition anfährt und hält, um dadurch bis auf Weiteres eine neue Lüftspieleinstellung wahrzunehmen.

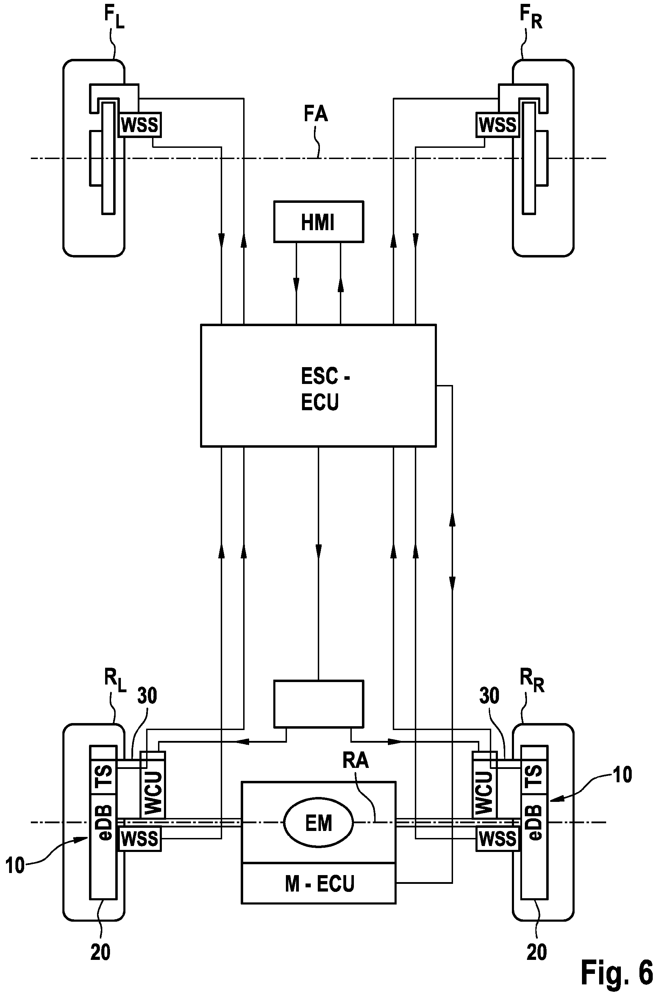

Die Fig. 6 verdeutlicht ein weitgehend anhand seiner Bezugsbezifferung selbsterklärendes elektrisch vernetzt ausgestaltetes Fahrzeugbremssystem mit elektrischen Radbremsen sowie mit Bremssensorik TS welche zur Ausführung der Erfindung geeignet und bestimmt sind, sowie noch umfassend einen rekuperativ ertüchtigten elektrischen Fahrzeugantrieb EM inclusive zugehöriger elektrischer Steuereinheit M-ECU, welche unter anderem mit der elektrischen Steuereinheit des Bremssystems ESC-ECU kommuniziert. Jeder elektrischen Radbremse 10 ist dabei aus Gründen der funktionalen Sicherheit eine eigene, lokale Radbremssteuereinheit WCU zugeordnet, damit in einem Notfall unter Ausfall von anderen Komponenten Notbremsmaßnahmen abgewickelt werden können, ohne die Insassensicherheit zu gefährden.

Erwähnte Schritte des erfindungsgemäßen Verfahrens können in der angegebenen Reihenfolge ausgeführt werden. Sie können jedoch auch in einer anderen Reihenfolge ausgeführt werden, soweit dies technisch sinnvoll ist. Das erfindungsgemäße Verfahren kann in einer seiner Ausführungen, beispielsweise mit einer bestimmten Zusammenstellung von Schritten, in der Weise ausgeführt werden, dass keine weiteren Schritte ausgeführt werden. Es können jedoch grundsätzlich auch weitere Schritte ausgeführt werden, auch solche welche nicht erwähnt sind.

Es sei darauf hingewiesen, dass in den Ansprüchen und in der Beschreibung Merkmale in Kombination beschrieben sein können, beispielsweise um das Verständnis zu erleichtern, obwohl diese auch separat voneinander verwendet werden können. Der Fachmann erkennt, dass solche Merkmale auch unabhängig voneinander mit anderen Merkmalen oder Merkmalskombinationen kombiniert werden können.

Rückbezüge in Unteransprüchen können bevorzugte Kombinationen der jeweiligen Merkmale kennzeichnen, schließen jedoch andere Merkmalskombinationen nicht aus.

### Bezugszeichenliste

1 rückwärtiger Endanschlag/Löseendanschlag
2 Ruheposition (mit def. Lüftspiel)
3/KP Kiss Point
4 Ruheposition (mit def. Lüftspiel) - fortgeschrittener Bremsverschleißzustand
5 Kiss Point - fortgeschrittener Bremsverschleißzustand
10 Radbremse
20 Bremsrotor (Bremstrommel/Bremsscheibe)
30 Aktuator
40, 45 Bremsbacken
50,55 Bremsbelag
60 Rückstellmittel/Rückstellfeder
ECU elektrische Steuereinheit
EM elektrischer Fahrzeug(getriebe)motor (mit integraler Rekuperationsbremse)
F Kraft [Newton]
FA Fahrzeug-Vorderachse
FR Vorderachsradbremse rechts
FL Vorderachsradbremse links
HMI Mensch-Maschine Schnittstelle für Betriebsbremsbetätigung
RR Hinterachsradbremse rechts
RL Hinterachsradbrems links
TS Radbremskraft- und/oder Radbremsmomentsensor
WCU elektrische Radbremssteuereinheit
WSS Raddrehsensor
I Strom [A]
t Zeit
s (Aktuatorstell-)Weg
KL Kennlinie
KP Kiss Point
L Lüftspielbereich/Lüftspiel
RA Fahrzeug-Hinterachse
α,β,γ,δ Zeitpunkt

## Patentansprüche

1. Verfahren zur elektronischen Lüftspielregelung (L) einer elektrischen Radbremse (10) für ein Kraftfahrzeug, umfassend einen Bremsrotor (20) und einen Bremsstator mit elektrischem Aktuator (30) sowie mindestens eine verstellbare Bremsbacke (40, 45), die durch den elektrischen Aktuator (30) in Richtung auf den Bremsrotor (20) zu betätigbar sowie rückstellbar gelagert ist, wobei das Verfahren folgende Schritte aufweist:
- elektrisches Anfahren einer definierten Ruheposition, derart dass ein definierter Lüftspielbereich (L) zwischen Bremsbacke (40, 45) und Bremsrotor (20) eingestellt ist, und
- definiertes Zuführen von elektrischer Energie an den elektrischen Aktuator (30), so dass der Aktuator (30) die angefahrene Ruheposition hält.

2. Verfahren nach Anspruch 1,
- wobei das Lüftspiel (L) jeweils radindividuell durch eine Steuereinheit (ECU) eingestellt sowie gehalten wird.

3. Verfahren nach Anspruch 1 oder 2,
- wobei die Radbremse (10) eine Trommelbremse ist.

4. Verfahren nach Anspruch 1 oder 2,
- wobei die Radbremse (10) eine Scheibenbremse ist.

5. Verfahren nach einem oder mehreren der vorhergehenden Ansprüche,
- wobei die Ruheposition während eines Betriebs der Radbremse (10) laufend aktualisiert wird.

6. Verfahren nach einem oder mehreren der vorhergehenden Ansprüche,
- wobei die Ruheposition anhand der Steuereinheit (ECU) mit jeder Bremsbetätigung automatisch überprüft und/oder aktualisiert wird.

7. Verfahren nach einem oder mehreren der vorhergehenden Ansprüche,
- wobei die Radbremse (10) eine oder mehrere Rückstellmittel (60) aufweist, welche die Bremsbacken (40, 45) in eine unbetätigte Position vorspannen.

8. Verfahren nach einem oder mehreren der vorhergehenden Ansprüche,
- wobei die Radbremse (10) kein mechanisches Lüftspieleinstellmittel aufweist.

9. Verfahren nach einem oder mehreren der vorhergehenden Ansprüche,
- wobei die zugeführte elektrische Energie eine Leistung von beispielsweise höchstens etwa 1 W beinhaltet.

10. Verfahren nach einem oder mehreren der vorhergehenden Ansprüche,
- wobei die zugeführte elektrische Energie zum Halten der Ruheposition geregelt wird.

11. Verfahren nach einem oder mehreren der vorhergehenden Ansprüche,
- wobei der Aktuator (30) mit den Bremsbacken (40, 45) verbunden ist, so dass er die Bremsbacken (40, 45) aktiv zurückziehen kann.

12. Verfahren nach einem oder mehreren der vorhergehenden Ansprüche,
- wobei die Ruheposition in Abhängigkeit von einem oder mehreren Parametern nachgeführt wird.

13. Verfahren nach Anspruch 10,
- wobei die Ruheposition basierend auf gemessenen Kraft-Weg-Kennlinien (KL) nachgeführt wird.

14. Verfahren nach einem oder mehreren der vorhergehenden Ansprüche,
- wobei die Ruheposition zum Beginn eines Zündungslaufs neu bestimmt wird.

15. Verfahren nach einem oder mehreren der vorhergehenden Ansprüche,
- wobei eine Lüftspielmodusauswahl vorgesehen ist.

16. Verfahren nach einem oder mehreren der vorhergehenden Ansprüche,
- wobei für einen erkannten Fehlerfall ein Fail-Safe-Modus programmiert ist, welcher jeglicher Lüftspielmodusauswahl vorgeht.

17. Elektronisches Kraftfahrzeugbremssystem mit zumindest einer elektronischen Steuereinheit (ECU) und umfassend mehrere elektrische Radbremsen (10),
- das dazu eingerichtet sowie konfiguriert ist, ein Verfahren nach einem oder mehreren der vorhergehenden Ansprüche 1 - 16 auszuführen.

18. Elektronisches Kraftfahrzeugbremssystem nach Anspruch 17, **dadurch gekennzeichnet, dass** ein Fahrzeugantriebsstrang und/oder rekuperatives Kraftfahrzeugbremssystem mit wenigstens einer elektronischen Steuereinheit (ECU) und mit einem Kraftfahrzeugantrieb und/oder angesteuerter Antriebsstrangbremse definiert ist, und wobei die elektronischen Steuereinheiten (ECU) der Systeme zwecks Datenaustausch und/oder zwecks Konfigurationsaustausch miteinander vernetzt sind und/oder miteinander kooperieren.

## Claims

1. Method for electronic air gap control (L) of an electrical wheel brake (10) for a motor vehicle, comprising a brake rotor (20) and a brake stator having an electric actuator (30), and at least one adjustable brake shoe (40, 45) which is activatable in the direction of the brake rotor (20) by the electric actuator (30) and is mounted so as to be restorable, wherein the method comprises the following steps:
- electrically adopting a defined resting position in such a manner that a defined air gap range (L) between the brake shoe (40, 45) and the brake rotor (20) is adjusted; and
- supplying electric energy to the electric actuator (30) in a defined manner so that the actuator (30) maintains the adopted resting position.

2. Method according to Claim 1,
- wherein the air gap (L) is in each case adjusted and maintained in a wheel-specific manner by a control unit (ECU).

3. Method according to Claim 1 or 2,
- wherein the wheel brake (10) is a drum brake.

4. Method according to Claim 1 or 2,
- wherein the wheel brake (10) is a disk brake.

5. Method according to one or a plurality of the preceding claims,
- wherein the resting position is continuously updated during operation of the wheel brake (10).

6. Method according to one or a plurality of the preceding claims,
- wherein the resting position is automatically verified and/or updated by means of the control unit (ECU) each time the brake is activated.

7. Method according to one or a plurality of the preceding claims,
- wherein the wheel brake (10) has one or a plurality of restoring means (60) which pre-loads/pre-load the brake shoes (40, 45) to a non-activated position.

8. Method according to one or a plurality of the preceding claims,
- wherein the wheel brake (10) does not have any mechanical air gap adjustment means.

9. Method according to one or a plurality of the preceding claims,
- wherein the electric energy supplied includes an output of, for example, at most approximately 1 W.

10. Method according to one or a plurality of the preceding claims,
- wherein the electric energy supplied is controlled to maintain the resting position.

11. Method according to one or a plurality of the preceding claims,
- wherein the actuator (30) is connected to the brake shoes (40, 45) in such a way that said actuator (30) can actively retract the brake shoes (40, 45).

12. Method according to one or a plurality of the preceding claims,
- wherein the resting position is tracked as a function of one or a plurality of parameters.

13. Method according to Claim 10,
- wherein the resting position is tracked based on measured force/displacement characteristic lines (KL).

14. Method according to one or a plurality of the preceding claims,
- wherein the resting position is newly determined at the beginning of each ignition run.

15. Method according to one or a plurality of the preceding claims,
- wherein an air gap mode selection is provided.

16. Method according to one or a plurality of the preceding claims,
- wherein a fail-safe mode is programmed for an identified fault, which has priority over any air gap mode selection.

17. Electronic motor vehicle brake system having at least one electronic control unit (ECU), and comprising a plurality of electrical wheel brakes (10),
- which is specified and configured to carry out a method according to one or a plurality of preceding Claims 1 to 16.

18. Electronic motor vehicle brake system according to Claim 17, **characterized in that** a vehicle powertrain and/or a recuperative motor vehicle brake system is defined having at least one electronic control unit (ECU) and having a motor vehicle drive and/or an actuated powertrain brake, and wherein the electronic control units (ECUs) of the systems are networked and/or cooperate with one another for the purpose of exchanging data and/or for the purpose of exchanging configurations.

## Revendications

1. Procédé de régulation électronique du jeu d'aération (L) d'un frein de roue électrique (10) pour un véhicule automobile, comprenant un rotor de frein (20) et un stator de frein avec actionneur électrique (30) ainsi qu'au moins une mâchoire de frein réglable (40, 45) qui peut être actionnée par l'actionneur électrique (30) en direction du rotor de frein (20) et qui est montée de manière à pouvoir être remise en place, le procédé présentant les étapes suivantes :
- l'approche électrique d'une position de repos définie, de telle sorte qu'une plage de jeu d'aération (L) définie est ajustée entre la mâchoire de frein (40, 45) et le rotor de frein (20), et
- l'amenée définie d'énergie électrique à l'actionneur électrique (30), de telle sorte que l'actionneur (30) maintient la position de repos approchée.

2. Procédé selon la revendication 1,
- dans lequel le jeu d'aération (L) est ajusté et maintenu individuellement pour chaque roue par une unité de commande (ECU).

3. Procédé selon la revendication 1 ou 2,
- dans lequel le frein de roue (10) est un frein à tambour.

4. Procédé selon la revendication 1 ou 2,
- dans lequel le frein de roue (10) est un frein à disque.

5. Procédé selon une ou plusieurs des revendications précédentes,
- dans lequel la position de repos est continuellement mise à jour pendant un fonctionnement du frein de roue (10).

6. Procédé selon une ou plusieurs des revendications précédentes,
- dans lequel la position de repos est automatiquement vérifiée et/ou mise à jour à l'aide de l'unité de commande (ECU) à chaque actionnement du frein.

7. Procédé selon une ou plusieurs des revendications précédentes,
- dans lequel le frein de roue (10) présente un ou plusieurs moyens de rappel (60) qui précontraignent les mâchoires de frein (40, 45) vers une position non actionnée.

8. Procédé selon une ou plusieurs des revendications précédentes,
- dans lequel le frein de roue (10) ne présente pas de moyen d'ajustement mécanique du jeu d'aération.

9. Procédé selon une ou plusieurs des revendications précédentes,
- dans lequel l'énergie électrique fournie comprend une puissance d'au plus environ 1 W par exemple.

10. Procédé selon une ou plusieurs des revendications précédentes,
- dans lequel l'énergie électrique amenée est régulée pour maintenir la position de repos.

11. Procédé selon une ou plusieurs des revendications précédentes,
- dans lequel l'actionneur (30) est connecté aux mâchoires de frein (40, 45) de telle sorte qu'il peut activement rétracter les mâchoires de frein (40, 45).

12. Procédé selon une ou plusieurs des revendications précédentes,
- dans lequel la position de repos est asservie en fonction d'un ou plusieurs paramètres.

13. Procédé selon la revendication 10,
- dans lequel la position de repos est asservie sur la base de courbes caractéristiques force/course (KL) mesurées.

14. Procédé selon une ou plusieurs des revendications précédentes,
- dans lequel la position de repos est redéterminée au début d'un cycle d'allumage.

15. Procédé selon une ou plusieurs des revendications précédentes,
- dans lequel une sélection de mode de jeu d'aération est prévue.

16. Procédé selon une ou plusieurs des revendications précédentes,
- dans lequel, en cas d'erreur détectée, un mode de sécurité intégrée est programmé, qui prévaut sur toute sélection de mode de jeu d'aération.

17. Système de freinage électronique de véhicule automobile avec au moins une unité de commande électronique (ECU) et comprenant plusieurs freins de roue électriques (10),
- qui est adapté et configuré pour exécuter un procédé selon une ou plusieurs des revendications 1 à 16 précédentes.

18. Système de freinage électronique de véhicule automobile selon la revendication 17, **caractérisé en ce qu'**une chaîne cinématique de véhicule et/ou un système de freinage récupératif de véhicule automobile est défini(e) avec au moins une unité de commande électronique (ECU) et avec un entraînement de véhicule automobile et/ou un frein de chaîne cinématique commandé, et dans lequel les unités de commande électroniques (ECU) des systèmes sont mises en réseau et/ou coopèrent entre elles en vue d'un échange de données et/ou en vue d'un échange de configuration.
